# EUROPEAN PATENT APPLICATION

(11) **EP 4 620 640 A1**
(43) Date of publication of application: **24.09.2025**
(21) Application number: 23891073.1
(22) Date of filing: 31.05.2023
(51) Int. Cl.: B26D 1/28, B22D 19/00, B26D 1/00, B26D 3/00, B29B 9/00

(54) **CUTTER BLADE, GRANULATING DEVICE, AND METHOD FOR MANUFACTURING CUTTER BLADE**

(30) Priority: 16.11.2022 JP 2022183230
(71) Applicant: The Japan Steel Works, Ltd., Tokyo 141-0032 (JP)
(72) Inventor: TAYA Ryusei, Tokyo 141-0032 (JP)
(74) Representative: Simmons & Simmons LLP (Munich)
(86) International application number: PCT/JP2023/020323
(87) International publication number: WO 2024/105911

(57) **Abstract**

A cutter blade (1) according to an embodiment comprises a cutting edge portion (20) which slides along a plate surface (204) of a die plate (201) to cut a material (206) extruded onto the plate surface (204) from a hole (205) formed in the plate surface (204), and a base metal portion (10) joined to a joining surface (25) of the cutting edge portion (20), wherein: the base metal portion (10) includes, in the vicinity of a joining surface (15), a cutting edge component detected part (10A) in which a cutting edge component, which is a constituent component of a cutting edge material included in the cutting edge portion (20), has been detected; the base metal portion (10) includes, inside the base metal portion (10), a cutting edge component detection-limit-or-lower part (10B) in which a concentration of the cutting edge component is equal to or less than a detection limit; and the cutting edge component detection part (10A) includes a part in which the concentration of the cutting edge component decreases with decreasing distance from the cutting edge component detection-limit-or-lower part (10B).

## Description

### Technical Field

The present disclosure relates to a cutter blade, a granulation apparatus, and a method for manufacturing a cutter blade.

### Background Art

Patent Literature 1 discloses a cutter blade for cutting a resin material extruded from holes formed in a die plate.

### Citation List

### Patent Literature

Patent Literature 1: Japanese Unexamined Patent Application Publication No. 2022-096887

### Summary of Invention

### Technical Problem

For example, a method for joining a cutting edge part to a base metal part by brazing requires a step of finishing the cutting edge part. Further, the cutting edge part or the base metal part may be damaged during the finishing step, so that the yield decreases. Therefore, in the method for joining a cutting edge part to a base metal part by brazing, it is difficult to reduce the manufacturing cost.

Other problems and novel features will become apparent from descriptions in this specification and the accompanying drawings.

### Solution to Problem

A cutter blade according to an embodiment includes: a cutting edge part configured to slide along a plate surface of a die plate and thereby to cut a material extruded from a hole formed in the plate surface onto the plate surface; and a base metal part joined to a joint surface of the cutting edge part, in which the base metal part includes, in a vicinity of the joint surface, a cutting edge component-detected part in which a cutting edge component is detected, the cutting edge component being a constituent of a cutting edge material contained in the cutting edge part, the base metal part includes, inside thereof, a cutting edge component under-detection-limit part, the cutting edge component under-detection-limit part being a part in which a concentration of the cutting edge component is equal to or lower than a detection limit thereof, and the cutting edge component-detected part includes a part in which the concentration of the cutting edge component gradually decreases toward the cutting edge component under-detection-limit part.

A granulation apparatus according to an embodiment includes the above-described cutter blade, a cutter blade holder part to which the cutter blade is connected, and the above-described die plate.

A method for manufacturing a cutter blade according to an embodiment includes the steps of: forming a film from a film forming material over at least a predetermined joint surface of a cutting edge part by plating or thermal spraying, the cutting edge part being configured to slide along a plate surface of a die plate and thereby to cut a material extruded from a hole formed in the plate surface onto the plate surface; disposing the cutting edge part in a cavity of a mold; charging a molten material into the cavity so that the molten material is brought into contact with the joint surface of the cutting edge part, the molten material being obtained by melting a base metal material contained in a base metal part; and solidifying the molten material and thereby joining the base metal part to the joint surface of the cutting edge part, in which the step of joining the base metal part to the joint surface is performed so that: the base metal part includes, in a vicinity of the joint surface, a cutting edge component-detected part in which a cutting edge component is detected, the cutting edge component being a constituent of a cutting edge material contained in the cutting edge part; the base metal part includes, inside thereof, a cutting edge component under-detection-limit part, the cutting edge component under-detection-limit part being a part in which a concentration of the cutting edge component is equal to or lower than a detection limit thereof; and the cutting edge component-detected part includes a part in which the concentration of the cutting edge component gradually decreases toward the cutting edge component under-detection-limit part.

### Advantageous Effects of Invention

According to the above-described embodiments, it is possible to provide a cutter blade, a granulation apparatus, and a method for manufacturing a cutter blade capable of reducing the manufacturing cost.

### Brief Description of Drawings

Fig. 1 is a configuration diagram showing an example of a granulation apparatus using a cutter blade according to a first embodiment;
Fig. 2 is a perspective view showing an example of a die plate in the granulation apparatus using the cutter blade according to the first embodiment;
Fig. 3 is a perspective view showing an example of the cutter blade according to the first embodiment;
Fig. 4 is a cross-sectional view showing an example of a joint part including joint surfaces of a base metal part and a cutting edge part according to the first embodiment, and shows a cross section taken along a line IV shown in Fig. 3;
Fig. 5 is a graph schematically showing an example of the concentration of a cutting edge component in the joint part including the joint surfaces of the base metal part and the cutting edge part according to the first embodiment, in which the horizontal axis indicates the distance from the joint surface in the base metal part, and the vertical axis indicates the concentration of the cutting edge component;
Fig. 6 is a cross-sectional view showing an example of the joint part including joint surfaces of the base metal part and the cutting edge part according to the first embodiment, and shows the cross section taken along the line IV shown in Fig. 3;
Fig. 7 is a graph schematically showing an example of the concentration of the cutting edge component in the joint part including joint surfaces of the base metal part and the cutting edge part according to the first embodiment, in which the horizontal axis indicates the distance from the joint surface in the base metal part, and the vertical axis indicates the concentration of the cutting edge component;
Fig. 8 is a cross-sectional view showing an example of the joint part including joint surfaces of the base metal part and the cutting edge part according to the first embodiment, and shows the cross section taken along the line IV shown in Fig. 3;
Fig. 9 is a graph schematically showing an example of the concentration of nickel in the joint part including joint surfaces of the base metal part and the cutting edge part according to the first embodiment, in which the horizontal axis indicates the distance from the joint surface in the base metal part, and the vertical axis indicates the concentration of nickel;
Fig. 10 is a cross-sectional view showing an example of a joint part including joint surfaces of a base metal part and a cutting edge part according to a modified example of the first embodiment, and shows the cross section taken along the line IV shown in Fig. 3;
Fig. 11 is a graph schematically showing an example of the concentration of a film forming component in the joint part including joint surfaces of the base metal part and the cutting edge part according to the modified example of the first embodiment, in which the horizontal axis indicates the distance from the joint surface in the base metal part, and the vertical axis indicates the concentration of the film forming component;
Fig. 12 is a flowchart showing an example of a method for manufacturing a cutter blade according to the first embodiment;
Fig. 13 is a cross-sectional view showing an example of a film formed on the cutting edge part and the joint surface of the cutting edge part in the method for manufacturing a cutter blade according to the first embodiment;
Fig. 14 is a cross-sectional view showing an example of the cutting edge part disposed in the cavity of a mold in the method for manufacturing a cutter blade according to the first embodiment;
Fig. 15 is a cross-sectional view showing an example of a molten material charged into the cavity of the mold in the method for manufacturing a cutter blade according to the first embodiment; and
Fig. 16 is a flowchart showing an example of a method for manufacturing a cutter blade according to a second embodiment.

### Description of Embodiments

The following descriptions and the drawings are partially omitted and simplified as appropriate for clarifying the explanation. Further, the same elements are assigned the same reference numerals (or symbols) throughout the drawings, and redundant descriptions thereof are omitted as appropriate.

### (First Embodiment)

A cutter blade and a method for manufacturing a cutter blade according to a first embodiment will be described. Firstly, a granulation apparatus will be described as an example of an apparatus using a cutter blade. Then, a cutter blade and a method for manufacturing a cutter blade will be described.

### <Underwater Granulation Apparatus>

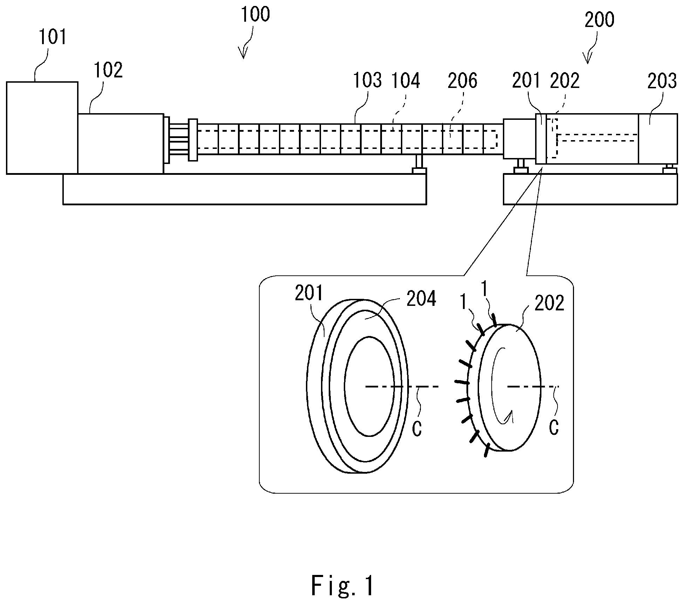

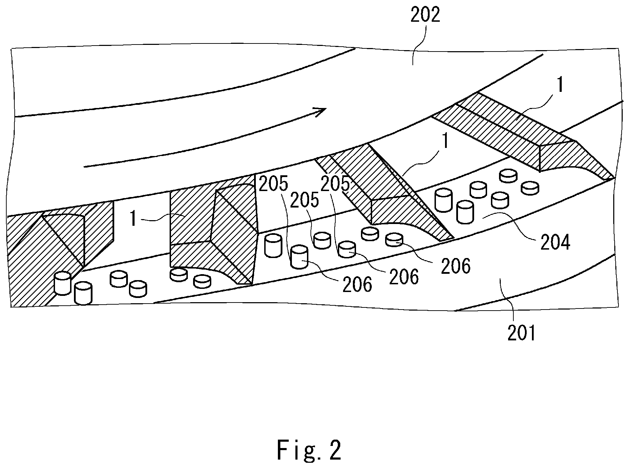

Fig. 1 is a configuration diagram showing an example of a granulation apparatus using a cutter blade according to the first embodiment. Fig. 2 is a perspective view showing an example of a die plate in the granulation apparatus using the cutter blade according to the first embodiment. In Fig. 1, an exploded view of a part of the granulation apparatus is shown in a box.

As shown in Figs. 1 and 2, the granulation apparatus is, for example, an underwater granulation apparatus 200. The underwater granulation apparatus 200 is connected to the downstream side of an extruder 100. The extruder 100 includes a drive unit 101, a speed reducer 102, a cylinder 103, and a screw 104. The rotation of the drive unit 101, which is, for example, a motor, is adjusted by the speed reducer 102 and transmitted to the screw 104. Therefore, the screw 104 is rotated inside the cylinder 103 by the adjusted driving power of the drive unit 101.

A material 206 fed into the cylinder 103 from a predetermined position in the cylinder 103 is extruded into the underwater granulation apparatus 200 by the rotating screw 104. The fed material 206 is, for example, a resin material. The extruder 100 plasticizes and kneads, for example, the resin material by heating in the cylinder 103 and the rotation of the screw 104, and extrudes the plasticized and kneaded resin material into the underwater granulation apparatus 200.

The underwater granulation apparatus 200 includes a die plate 201, a cutter blade holder part 202, a drive unit 203, and a cutter blade 1. The die plate 201, the cutter blade holder part 202, and the cutter blade 1 are disposed under water. The die plate 201 has a plate surface 204. A plurality of holes 205 are formed in the plate surface 204. A material 206 extruded by the rotating screw 104 is extruded onto the plate surface 204 through the holes 205 formed in the plate surface 204. The material 206 extruded onto the plate surface 204 is, for example, molten resin. In Fig. 2, reference numerals are added to only some of the holes 205 and some of pieces of the material 206 so as not to complicate the drawing.

Each of the die plate 201 and the plate surface 204 has a central axis C. The cutter blade holder part 202 is disposed so as to be opposed to the die plate 201. The cutter blade holder part 202 rotates around the central axis C by the driving power of the drive unit 203. The cutter blade holder part 202 holds a plurality of cutter blades 1. In Fig. 1, reference numerals are added to only some of the cutter blades 1 so as not to complicate the drawing.

For example, the cutter blades 1 are held at equal intervals along the peripheral edge of the circular cutter blade holder part 202. Further, as the cutter blade holder part 202 rotates, each cutter blade 1 rotates over the plate surface 204. Each cutter blade 1 slides along the plate surface 204 and thereby cut the material 206 extruded from the holes 205 onto the plate surface 204. For example, the molten resin extruded from the holes 205 onto the plate surface 204 is cut by the cutter blades 1. The cut molten resin solidifies under water and becomes resin pellets.

### <Cutter Blade>

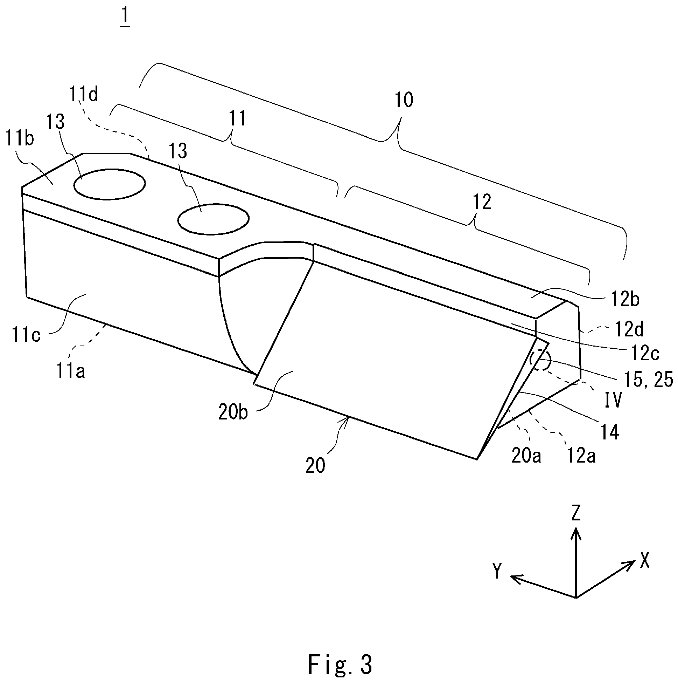

Next, the cutter blade 1 will be described. Fig. 3 is a perspective view showing an example of the cutter blade 1 according to the first embodiment. As shown in Fig. 3, the cutter blade 1 includes a base metal part 10 and a cutting edge part 20. A joint surface 15 of the base metal part 10 is joined to a joint surface 25 of the cutting edge part 20.

Note that in order to explain the cutter blade 1, an XYZ orthogonal coordinate system is introduced. When the cutter blade 1 is disposed over the plate surface 204, the direction orthogonal to the plate surface 204 is defined as a Z axis direction. The direction in which the cutting edge part extends is defined as a Y direction. The direction orthogonal to the Y and Z axis directions is defined as an X axis direction.

### <Base Metal Part>

The base metal part 10 includes a mounting part 11 and a ridge part 12. The mounting part 11 and the ridge part 12 are disposed adjacent to each other and connected to each other in the Y axis direction. The base metal part 10 contains, for example, stainless steel as its material. Therefore, the base metal part 10 contains, as a base metal material, stainless steel containing iron, nickel, chromium, or the like. Note that the base metal material is not limited to stainless steel containing iron, nickel, chromium, or the like, and instead may be stainless steel containing other metals or may be a material other than stainless steel. In some cases, the base metal material may be a material containing a resin material or the like.

The mounting part 11 is connected to the cutter blade holder part 202 which transmits power for sliding the cutter blade along the plate surface 204. The mounting part 11 is formed, for example, in a part of the base metal part 10 on the +Y axis direction side thereof. The mounting part 11 has, for example, a quadrangular prism shape, and has a bottom surface 11a, an upper surface 11b, a front surface 11c, and a rear surface 11d. The bottom surface 11a is a surface on the -Z axis direction side, and the upper surface 11b is a surface on the +Z axis direction side. The front surface 11c is a surface on the -X axis direction side, and the rear surface 11d is a surface on the +X axis direction side.

In the mounting part 11, holes 13 for connecting it to the cutter blade holder part 202 are formed. Only one hole 13 may be formed, or a plurality of holes 13 may be formed. The holes 13 penetrate, i.e., extend, from the upper surface 11b to the bottom surface 11a. For example, the cutter blade 1 is fixed to the cutter blade holder part 202 by inserting bolts into the holes 13 of the mounting part 11 and holes formed in the cutter blade holder part 202. Alternatively, means for connecting the cutter blade to the cutter blade holder part 202 other than the holes 13, such as a groove(s), may be formed in the mounting part 11.

The ridge part 12 is opposed to the plate surface 204 with the cutting edge part 20 interposed therebetween. The cutting edge part 20 is joined to the ridge part 12. The ridge part 12 is formed, for example, in a part of the base metal part 10 on the -Y axis direction side thereof. The ridge part 12 extends, for example, in the Y axis direction. The ridge part 12 has a bottom surface 12a, an upper surface 12b, a front surface 12c, and a rear surface 12d. The bottom surface 12a is a surface on the -Z axis direction side, and the upper surface 12b is a surface on the +Z axis direction side. The front surface 12c is a surface on the -X axis direction side, and the rear surface 12d is a surface on the +X axis direction side. For example, the front surface 12c has an inclined surface 14. The joint surface 25 of the cutting edge part 20 is joined to the inclined surface 14 of the front surface 12c. Therefore, the inclined surface 14 of the ridge part 12 of the base metal part 10 serves as the joint surface 15. Note that the part or the like to which the cutting edge part 20 is joined is not limited to the front surface 12c of the ridge part 12 of the base metal part 10, and the cutting edge part 20 may be joined to a part other than the front surface 12c. The base metal part 10 may be directly joined to the cutting edge part 20. Specifically, the base metal part 10 may be directly joined to the cutting edge part 20 without interposing a film made of a film forming material such as a nickel film. Note that, in some cases, the base metal part 10 may be joined to the cutting edge part 20 with a film made of a film forming material such as a nickel film interposed therebetween.

### <Cutting Edge Part>

The cutting edge part 20 is a part that slides over the plate surface 204. The cutting edge part 20 slides along the plate surface 204 of the die plate 201 and thereby cutting the material 206 extruded from the holes 205 formed in the plate surface 204 onto the plate surface 204. The cutting edge part 20 contains, for example, titanium carbide (TiC) as a cutting edge material. For example, the cutting edge part 20 includes a sintered material obtained by sintering titanium carbide. Note that the cutting edge material of the cutting edge part 20 is not limited to materials containing titanium carbide, and instead may be a material containing other metals such as tungsten carbide (WC). The cutting edge material contains a cutting edge component as its constituent. For example, when the cutting edge material contains titanium carbide, the cutting edge component contains titanium (Ti).

The cutting edge part 20 has, for example, a plate shape in which the cutting edge extends in the Y axis direction. The cutting edge part 20 has a bottom surface 20a and an upper surface 20b. The bottom surface 12a is a surface on the -Z axis direction side, and the upper surface 12b is a surface on the +Z axis direction side. The bottom surface 20a of the cutting edge part 20 has the joint surface 25 which is joined to the joint surface 15 of the base metal part 10. The shape of the cutting edge part 20 is not limited to the plate shape, and instead may be a prism shape as long as it has a joint surface 25 which is joined to the base metal part 10. Further, the cutting edge part 20 may have the joint surface 25 in a part other than the bottom surface 20a.

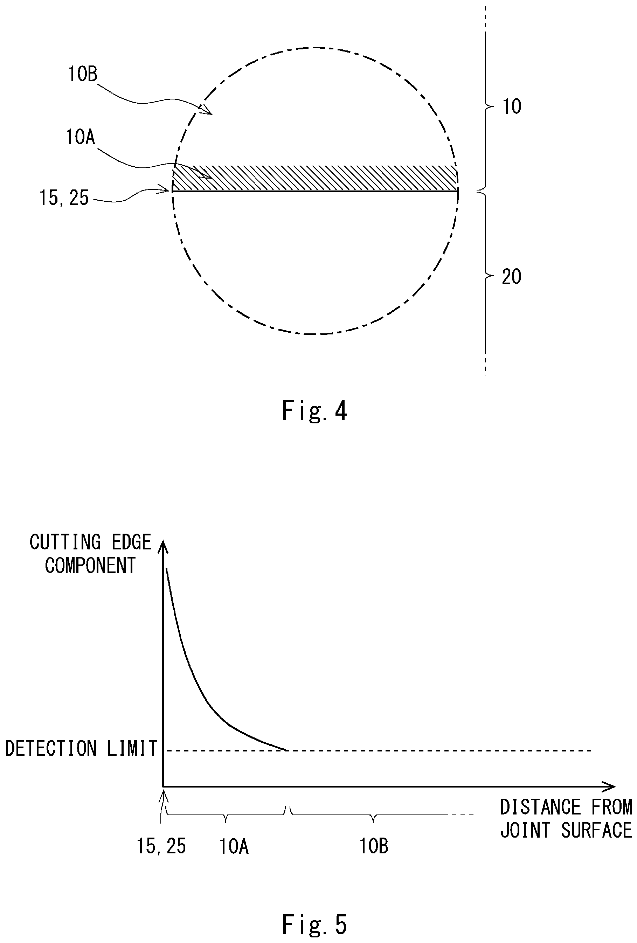

Fig. 4 is a cross-sectional view showing an example of a joint part including joint surfaces 15 and 25 of a base metal part 10 and a cutting edge part 20, respectively, according to the first embodiment, and shows a cross section taken along a line IV shown in Fig. 3. As shown in Fig. 4, the joint surface 15 of the base metal part 10 is joined to the joint surface 25 of the cutting edge part 20. The base metal part 10 includes a cutting edge component-detected part 10A in the vicinity of the joint surface 15. The cutting edge component-detected part 10A is a part in which a cutting edge component, which is a constituent of the cutting edge material contained in the cutting edge part 20, is detected. When the cutting edge part 20 contains titanium carbide as the cutting edge material, the cutting edge component contains titanium. Further, the base metal part 10 includes, inside thereof, a cutting edge component under-detection-limit part 10B. The cutting edge component under-detection-limit part 10B is a part in which the concentration of the cutting edge component is equal to or lower than a detection limit thereof. The state in which the concentration of the cutting edge component is equal to or lower than the detection limit thereof means a state in which the concentration of the cutting edge component is equal to or lower than the detection limit of a concentration detector such as a mass analyzer.

Fig. 5 is a graph schematically showing an example of the concentration of the cutting edge component in the joint part including the joint surfaces 15 and 25 of a base metal part 10 and a cutting edge part 20, respectively, according to the first embodiment, in which the horizontal axis indicates the distance from the joint surface 15 in the base metal part 10, and the vertical axis indicates the concentration of the cutting edge component. As shown in Fig. 5, the cutting edge component-detected part 10A includes a part in which the concentration of the cutting edge component gradually decreases toward the cutting edge component under-detection-limit part 10B (i.e., the concentration of the cutting edge component decreases as the distance to the cutting edge component under-detection-limit part 10B decreases).

In Fig. 5, the concentration of the cutting edge component in the cutting edge component-detected part 10A monotonically decreases. However, the feature that the cutting edge component-detected part 10A includes a part in which the concentration of the cutting edge component gradually decreases toward the cutting edge component under-detection-limit part 10B is not limited to the monotonical decrease of the concentration of the cutting edge component in the cutting edge component-detected part 10A. For example, the feature that the cutting edge component-detected part 10A includes a part in which the concentration of the cutting edge component gradually decreases toward the cutting edge component under-detection-limit part 10B may means that the concentration of the cutting edge component in the cutting edge component-detected part 10A first increases and forms a peak, and then gradually decreases toward the cutting edge component under-detection-limit part 10B. Further, in the cutting edge component-detected part 10A, the cutting edge component may exhibit a constant concentration and then sharply decrease toward the cutting edge component under-detection-limit part 10B. In the following description in the specification, including a part in which a concentration decreases means a feature similar to the above-described feature.

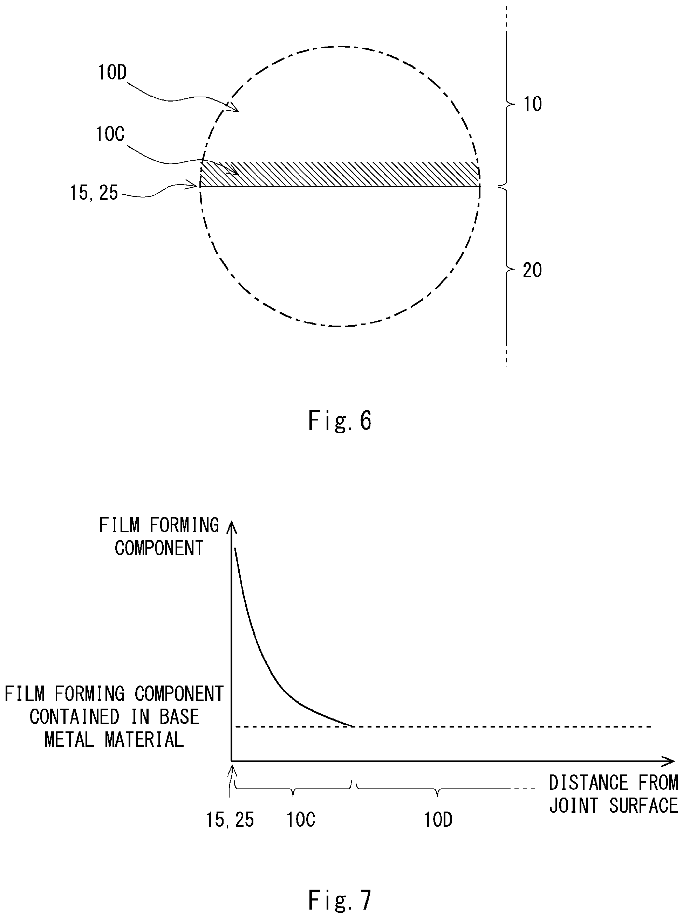

Fig. 6 is a cross-sectional view showing an example of a joint part including joint surfaces 15 and 25 of a base metal part 10 and a cutting edge part 20, respectively, according to the first embodiment, and shows a cross section taken along the line IV shown in Fig. 3. As shown in Fig. 6, the base metal part 10 includes a first film forming component-detected part 10C in the vicinity of the joint surface 15. The first film forming component-detected part 10C is a part in which the concentration of the film forming component detected therein is higher than that of the film forming component contained in the base metal material.

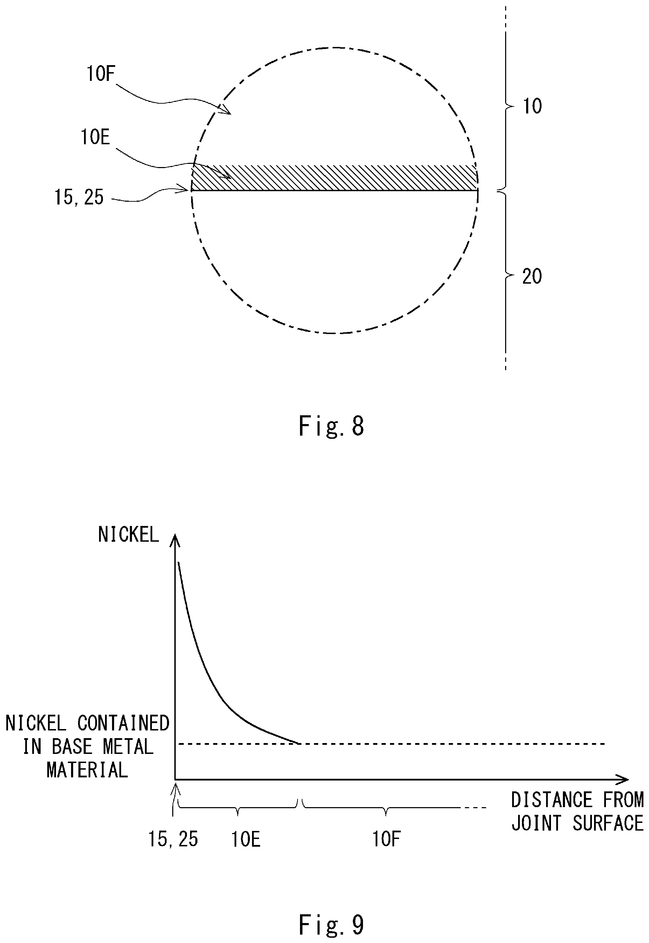

Note that the base metal part 10 may contain, as the base metal material, a material containing a film forming component, which is a constituent of a film forming material from which a film can be formed over the cutting edge part 20 by plating or thermal spraying. Specifically, the film forming material from which a film can be formed over the cutting edge part 20 by plating or thermal spraying is, for example, nickel. The film forming component is nickel. Therefore, the base metal part 10 may contain, as the base metal material, stainless steel containing nickel. In this case, the base metal part 10 includes, in the vicinity of the joint surface 15, a part in which the concentration of nickel detected therein is higher than that of nickel originally contained in the base metal material (a first nickel-detected part, see Figs. 8 and 9). Note that the film forming material is not limited to nickel as long as it is a material from which a film can be formed over the cutting edge part 20 by plating or thermal spraying, and may be, for example, chromium or the like contained in the base metal material such as stainless steel, or a metal or the like not contained in the base metal material such as stainless steel.

The base metal part 10 includes a second film forming component-detected part 10D inside the base metal part 10. The second film forming component-detected part 10D is a part in which the concentration of the film forming component is equal to or lower than that of the film forming component contained in the base metal material. Specifically, for example, when the base metal part 10 contains stainless steel containing nickel as the base metal material, the base metal part 10 includes, inside thereof, a part in which the concentration of nickel is equal to or lower than that of nickel originally contained in the base metal material (a second nickel-detected part, see Figs. 8 and 9).

Fig. 7 is a graph schematically showing an example of the concentration of the film forming component in the joint part including the joint surfaces 15 and 25 of a base metal part 10 and a cutting edge part 20, respectively, according to the first embodiment, in which the horizontal axis indicates the distance from the joint surface 15 in the base metal part 10, and the vertical axis indicates the concentration of the film forming component. As shown in Fig. 7, the first film forming component-detected part 10C includes a part in which the concentration of the film forming component gradually decreases toward the second film forming component-detected part 10D (i.e., the concentration of the film forming component decreases as the distance to the second film forming component-detected part 10D decreases).

A case where, for example, the base metal part 10 contains stainless steel containing nickel as the base metal material will be described. Fig. 8 is a cross-sectional view showing an example of a joint part including joint surfaces 15 and 25 of a base metal part 10 and a cutting edge part 20, respectively, according to the first embodiment, and shows a cross section taken along the line IV shown in Fig. 3. Fig. 9 is a graph schematically showing an example of the concentration of nickel in the joint part including the joint surfaces 15 and 25 of a base metal part 10 and a cutting edge part 20, respectively, according to the first embodiment, in which the horizontal axis indicates the distance from the joint surface 15 in the base metal part 10, and the vertical axis indicates the concentration of nickel.

As shown in Figs. 8 and 9, the base metal part 10 includes, in the vicinity of the joint surface 15, a first nickel-detected part 10E in which the concentration of nickel detected therein is higher than that of nickel originally contained in the base metal material. The first nickel-detected part 10E corresponds to the above-described first film forming component-detected part 10C in which the first film forming component is limited to nickel. The base metal part 10 includes, inside thereof, a second nickel-detected part 10F in which the concentration of nickel is equal to or lower than that of nickel contained in the base metal material. The second nickel-detected part 10F corresponds to the above-described second film forming component-detected part 10D in which the second film forming component is limited to nickel. The first nickel-detected part 10E includes a part in which the concentration of nickel gradually decreases toward the second nickel-detected part (i.e., the concentration of nickel decreases as the distance to the second nickel-detected part decreases).

### (Modified Example)

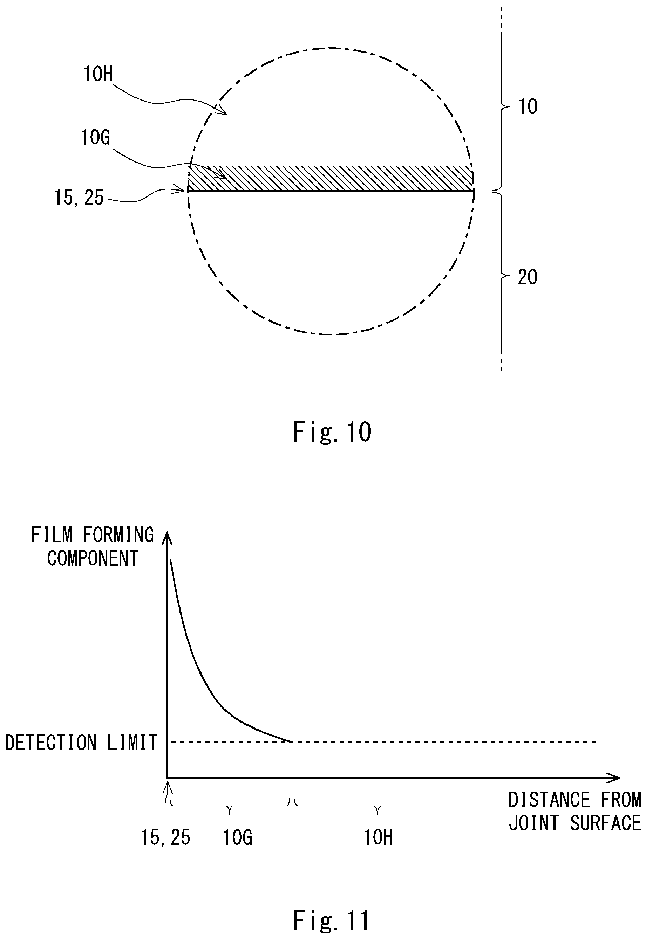

As a modified example, a case where no film forming material from which a film can be formed over the cutting edge part 20 by plating or thermal spraying is originally contained in the base metal material will be described. Fig. 10 is a cross-sectional view showing an example of a joint part including joint surfaces 15 and 25 of a base metal part 10 and a cutting edge part 20, respectively, according to the modified example of the first embodiment, and shows a cross section taken along the line IV shown in Fig. 3. Fig. 11 is a graph schematically showing an example of the concentration of the film forming component in the joint part including the joint surfaces 15 and 25 of a base metal part 10 and a cutting edge part 20, respectively, according to the modified example of the first embodiment, in which the horizontal axis indicates the distance from the joint surface 15 in the base metal part 10, and the vertical axis indicates the concentration of the film forming component.

As shown in the modified example shown in Figs. 10 and 11, when no film forming material is contained in the base metal material, the base metal part 10 includes, in the vicinity of the joint surface 15, a film forming component-detected part 10G in which a film forming component, which is a constituent of a film forming material from which a film can be formed over the cutting edge part 20 by plating or thermal spraying, is detected. The base metal part 10 includes, inside thereof, a film forming component under-detection-limit part 10H in which the concentration of the film forming component is equal to or lower than the detection limit thereof. The film forming component-detected part 10G includes a part in which the concentration of the film forming component gradually decreases toward the film forming component under-detection-limit part 10H (i.e., the concentration of the film forming component decreases as the distance to the film forming component under-detection-limit part 10H decreases).

### <Method for Manufacturing Cutter Blade>

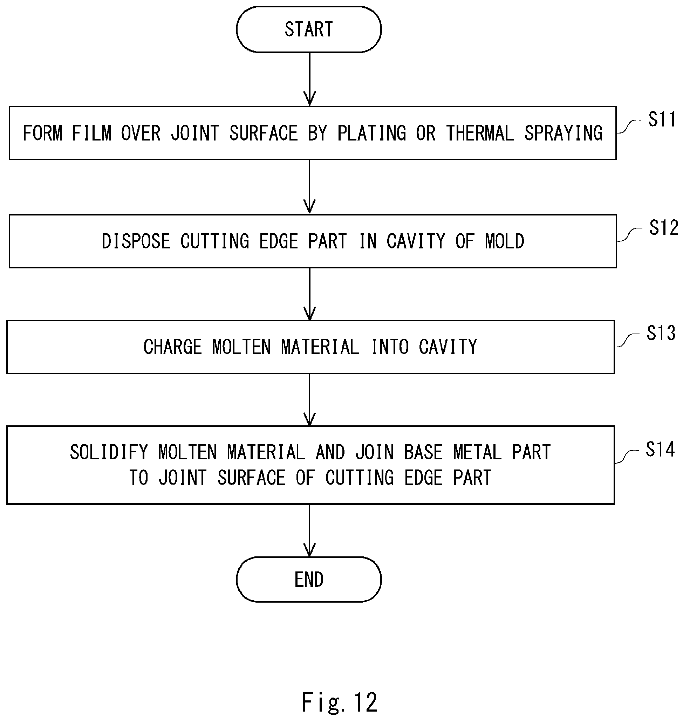

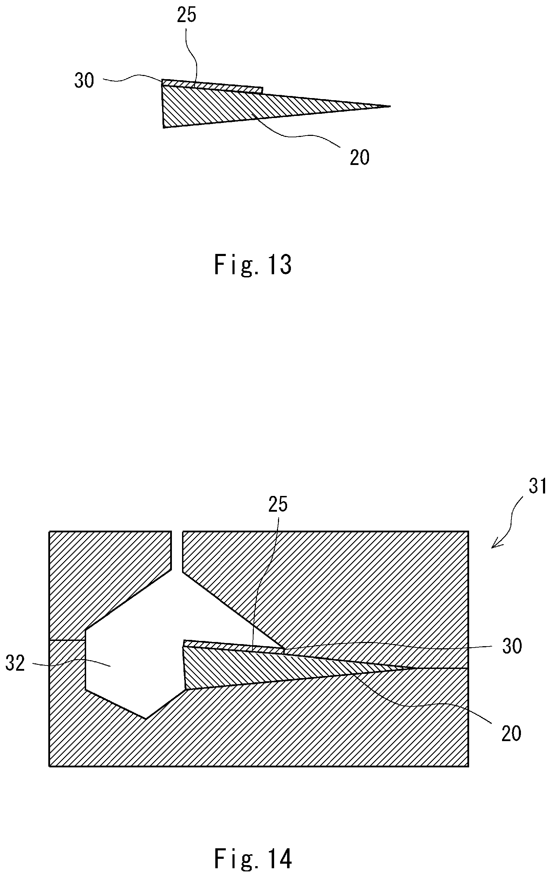

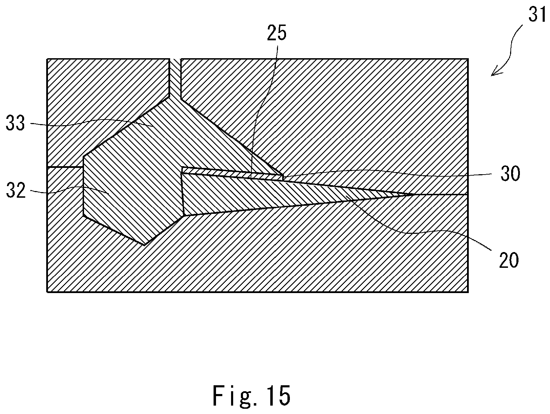

Next, a method for manufacturing a cutter blade according to this embodiment will be described. Fig. 12 is a flowchart showing an example of a method for manufacturing a cutter blade 1 according to the first embodiment. Fig. 13 is a cross-sectional view showing an example of a film 30 formed over the cutting edge part 20 and the joint surface 25 of the cutting edge part 20 in the method for manufacturing the cutter blade 1 according to the first embodiment. Fig. 14 is a cross-sectional view showing an example of the cutting edge part 20 disposed in the cavity 32 of a mold 31 in the method for manufacturing the cutter blade 1 according to the first embodiment. Fig. 15 is a cross-sectional view showing an example of a molten material 33 charged into the cavity 32 of the mold 31 in the method for manufacturing the cutter blade 1 according to the first embodiment.

As shown in a step S11 in Fig. 12 and in Fig. 13, a film 30 is formed from a film forming material over at least the joint surface 25 of the cutting edge part 20 by plating or thermal spraying. For example, a nickel film is formed over at least the joint surface 25 by plating or thermal spraying. Note that when the film 30 is formed from a film forming material, the film 30 may be formed from the film forming material over the entire cutting edge part 20. The cutting edge part 20 may contain titanium carbide as the cutting edge material, and the cutting edge component may contain titanium.

Next, as shown in a step S12 in Fig. 12 and in Fig. 14, the cutting edge part 20 is disposed in the cavity 32 of the mold 31.

Next, as shown in a step S13 in Fig. 12 and in Fig. 15, a molten material 33 is charged into the cavity 32. Specifically, the molten material 33 obtained by melting a base metal material contained in the base metal part 10 is charged into the cavity 32 so that the molten material 33 is brought into contact with the joint surface 25 of the cutting edge part 20. When the molten material 33 is charged into the cavity 32, the base metal material may contain a film forming component, which is a constituent of the film forming material. For example, the base metal part 10 may contain stainless steel containing nickel as the base metal material. The step of charging the molten material 33 into the cavity 32 may be performed in the atmosphere.

Next, as shown in a step S14 of Fig. 12, the molten material 33 is solidified and the base metal part 10 is thereby joined to the joint surface 25 of the cutting edge part 20. Further, the base metal part 10 includes, in the vicinity of the joint surface 15, a cutting edge component-detected part 10A in which a cutting edge component, which is a constituent of the cutting edge material contained in the cutting edge part 20, is detected. Further, the base metal part 10 includes, inside thereof, a cutting edge component under-detection-limit part 10B in which the concentration of the cutting edge component is equal to or lower than the detection limit thereof. Further, the cutting edge component-detected part 10A includes a part in which the concentration of the cutting edge component gradually decreases toward the cutting edge component under-detection-limit part 10B (i.e., the concentration of the cutting edge component decreases as the distance to the cutting edge component under-detection-limit part 10B decreases).

When the molten material 33 is solidified and the base metal part 10 is thereby joined to the joint surface 25 of the cutting edge part 20, the base metal part 10 may include, in the vicinity of the joint surface 15, a first film forming component-detected part 10C in which the concentration of the film forming component detected therein is higher than that of the film forming component contained in the base metal material. The base metal part 10 may include a second film forming component-detected part 10D in which the concentration of the film forming component is equal to or lower than that of the film forming component contained in the base metal material. Then, the first film forming component-detected part 10C may include a part in which the concentration of the film forming component gradually decreases toward the second film forming component-detected part 10D (i.e., the concentration of the film forming component decreases as the distance to the second film forming component-detected part 10D decreases).

For example, when the molten material 33 is solidified and the base metal part 10 is thereby joined to the joint surface 25 of the cutting edge part 20, the base metal part 10 may include, in the vicinity of the joint surface 15, a first nickel-detected part 10E in which the concentration of nickel detected therein is higher than that of nickel contained in the base metal material. Further, the base metal part 10 may include, inside thereof, a second nickel-detected part 10F in which the concentration of nickel is equal to or lower than that of nickel contained in the base metal material. Further, the first nickel-detected part 10E may include a part in which the concentration of nickel gradually decreases toward the second nickel-detected part 10F (i.e., the concentration of nickel decreases as the distance to the second nickel-detected part 10F decreases). The step of solidifying the molten material 33 and thereby joining the base metal part 10 to the joint surface 25 of the cutting edge part 20 may be performed in the atmosphere.

Note that in the case where the film forming material is a material that is not contained in the base metal material as in the above-described modified example, when the molten material 33 is solidified and the base metal part 10 is thereby joined to the joint surface 25 of the cutting edge part 20, the base metal part 10 includes, in the vicinity of the joint surface 15, a film forming component-detected part 10G in which a film forming component, which is a constituent of the film forming material, is detected. Further, the base metal part 10 includes, inside thereof, a film forming component under-detection-limit part 10H in which the concentration of the film forming component is equal to or lower than the detection limit thereof. Further, the film forming component-detected part 10G includes a part in which the concentration of the film forming component gradually decreases toward the film forming component under-detection-limit part 10H (i.e., the concentration of the film forming component decreases as the distance to the film forming component under-detection-limit part 10H decreases).

### (Comparative Example)

Next, prior to describing effects of this embodiment, a comparative example will be described. In a method for manufacturing a cutter blade according to a comparative example, no film 30 made of the film forming material is formed from over the joint surface 25, and the molten material 33 of the base metal part 10 is directly brought into contact with the joint surface 25 of the cutting edge part 20 and thereby solidified. Specifically, in the method for manufacturing a cutter blade according to the comparative example, for example, stainless steel is melted and the melted stainless steel is directly brought into contact with the cutting edge part 20 containing titanium carbide.

In the method for manufacturing a cutter blade according to the comparative example, when the molten material 33 is directly brought into contact with the joint surface 25 of the cutting edge part 20, it is difficult to join them to each other due to an oxide film formed in the joint surface 25. For example, the step of charging the molten material 33 into the cavity 32, and the step of solidifying the molten material 33 and thereby joining the base metal part 10 to the joint surface 25 of the cutting edge part 20 are performed in the atmosphere. This is because it may not be possible to control the atmosphere in such steps owing to the manufacturing apparatus, and hence the joining needs to be performed in the atmosphere. Therefore, in the atmosphere, an oxide film is formed in the joint surface 25 which is in a high-temperature state because of the molten material 33.

### (Effect of This Embodiment)

Next, effects of this embodiment will be described. In this embodiment, a film 30 is formed from a film forming material over the joint surface 25 of the cutting edge part 20 by plating or thermal spraying, and then a molten material 33 is brought into contact with the joint surface 25. Therefore, even when the step of charging the molten material 33 into the cavity 32, and the step of solidifying the molten material 33 and thereby joining the base metal part 10 to the joint surface 25 of the cutting edge part 20 are performed in the atmosphere, it is possible to prevent an oxide film from being formed by the film 30 formed over the joint surface 25. Therefore, the base metal part 10 and the cutting edge part 20 can be fused-joined or diffused-joined. In this way, the junction between the base metal part 10 and the cutting edge part 20 can be strengthened.

Further, the cutter blade 1 according to this embodiment includes, in the vicinity of the joint surface 15 of the base metal part 10, a cutting edge component-detected part 10A in which a cutting edge component is detected. For example, when the cross section of the base metal part 10 is analyzed, titanium is also detected in the area of the melted and solidified stainless steel of the base metal part 10. Because of this, it is presumed that the base metal part 10 and the cutting edge part 20 are fused-joined or diffused-joined. Therefore, the junction between the base metal part 10 and the cutting edge part 20 can be strengthened. Accordingly, the yield of cutter blades 1 can be improved, and the manufacturing cost can be reduced.

Further, the base metal part 10 includes, in the vicinity of the joint surface 15 of the base metal part 10, a first film forming component-detected part 10C in which a film forming component is detected. Specifically, the base metal part 10 includes a first nickel-detected part 10E in the vicinity of the joint surface 15. Therefore, the junction between the base metal part 10 and the cutting edge part 20 can be strengthened.

Further, in the method for manufacturing a cutter blade 1 according to this embodiment, brazing can be omitted. Therefore, the time and cost required for the brazing can be reduced. Further, the finishing process can also be eliminated, so that it is possible to prevent the cutting edge part 20 or the base metal part 10 from being damaged due to the finishing process.

### (Second Embodiment)

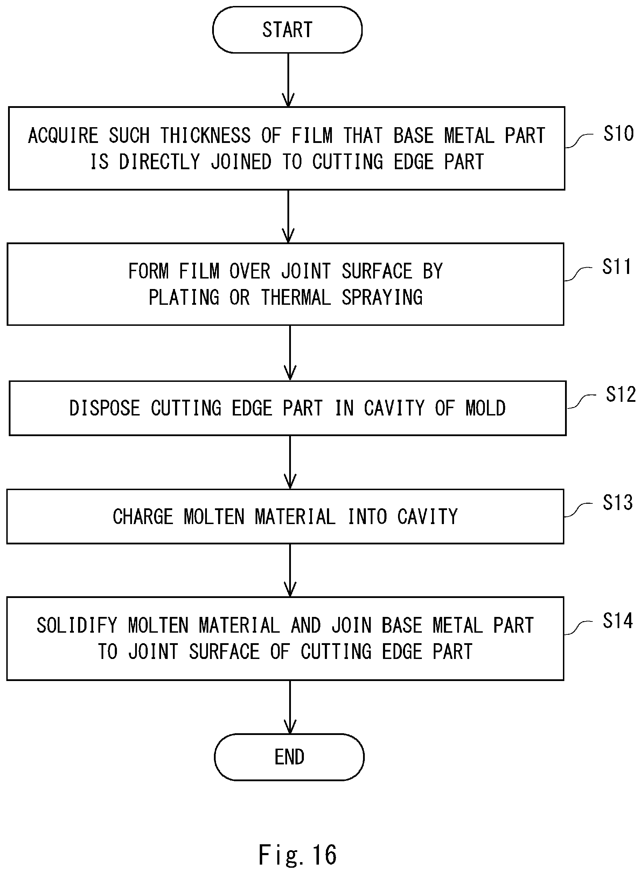

Next, a second embodiment will be described. In a method for manufacturing a cutter blade 1 according to this embodiment, the thickness of the film 30 with which the film 30 disappears when the molten material is solidified is acquired. Fig. 16 is a flowchart showing an example of the method for manufacturing a cutter blade 1 according to the second embodiment.

As shown in a step S10 in Fig. 16, the method for manufacturing a cutter blade 1 according to this embodiment includes, prior to the step S11 of forming a film 30 from the film forming material over the joint surface 25 of the cutting edge part 20 by plating or thermal spraying, a step S 10 of acquiring the thickness of the film with which the base metal part 10 is directly joined to the cutting edge part 20. Specifically, when the molten material 33 is brought into contact with the film 30, which is made of the film forming material and formed over the joint surface 25 of the cutting edge part 20, and the molten material 33 is thereby solidified, the film 30 disappears, and the thickness of the film 30 with which the base metal part 10 is directly joined to the cutting edge part 20 is acquired. For example, the thickness of the nickel film formed over the joint surface 25 with which the nickel film disappears and the base metal part 10 is thereby directly joined to the cutting edge part 20 when the molten material 33 is brought into contact with the nickel film and the molten material 33 is thereby solidified is acquired.

The thickness of the film 30 made of the film forming material with which the film 30 disappears and the base metal part 10 is thereby directly joined to the cutting edge part 20 when the molten material 33 is brought into contact with the film 30 and the molten material 33 is thereby solidified may be changed depending on the base metal material and the cutting edge material, or may be changed depending on the shapes of the base metal part 10 and the cutting edge part 20. The thickness of the film 30 that disappears may be, for example, several hundred µm or smaller, or several tens µm or smaller, and in some cases, may be several µm or smaller. For example, the thickness of the film 30 that disappears may be 1 to 10 µm, 10 µm to 100 µm, or 100 µm to 900 µm. Further, the thickness of the film 30 that disappears may be 1 nm to 10 nm, 10 to 100 nm, or 100 to 900 nm.

By forming the film 30 having a thickness acquired described above over the joint surface 25, the base metal part 10 can be directly joined to the cutting edge part 20 in the step S14 in which the molten material 33 is solidified and the base metal part 10 thereby joined to the joint surface 25. Steps S11 to S14 in Fig. 16 are similar to the steps S11 to S14, respectively, in Fig. 12.

According to this embodiment, it is possible to, when the molten material 33 is solidified and the base metal part 10 is thereby joined to the joint surface 25, make the film 30 made of the film forming material disappear. Therefore, the base metal part 10 and the cutting edge part 20 can be fused-joined or diffused-joined, and the junction between the base metal part 10 and the cutting edge part 20 can be strengthened. The rest of the configuration and effects are included in the descriptions of the first embodiment and the modified example.

Although the present disclosure has been described above based on the embodiments in a concrete manner, needless to say, the present disclosure is not limited to the first and second embodiments and the modified example, and they may be modified in various ways without departing from the scope and sprit of the disclosure. Further, a combination obtained by combining two or more of the configurations of the first and second embodiments and the modified example is also included in the scope of the technical principle of the present disclosure.

This application is based upon and claims the benefit of priority from Japanese patent application No. 2022-183230, filed on November 16, 2022, the disclosure of which is incorporated herein in its entirety by reference.

### Reference Signs List

- 1: CUTTER BLADE
- 10: BASE METAL PART
- 10A: CUTTING EDGE COMPONENT-DETECTED PART
- 10B: CUTTING EDGE COMPONENT UNDER-DETECTION-LIMIT PART
- 10C: FIRST FILM FORMING COMPONENT-DETECTED PART
- 10D: SECOND FILM FORMING COMPONENT-DETECTED PART
- 10E: FIRST NICKEL-DETECTED PART
- 10F: SECOND NICKEL-DETECTED PART
- 10G: FILM FORMING COMPONENT-DETECTED PART
- 10H: FILM FORMING COMPONENT-DETECTED PART
- 11: MOUNTING UNIT
- 11a: BOTTOM SURFACE
- 11b: UPPER SURFACE
- 11c: FRONT SURFACE
- 11d: REAR SURFACE
- 12: RIDGE PART
- 12a: BOTTOM SURFACE
- 12b: UPPER SURFACE
- 12c: FRONT SURFACE
- 12d: REAR SURFACE
- 13: HOLE
- 14: INCLINED SURFACE
- 15: JOINT SURFACE
- 20: CUTTING EDGE PART
- 20a: BOTTOM SURFACE
- 20b: UPPER SURFACE
- 25: JOINT SURFACE
- 30: FILM
- 31: MOLD
- 32: CAVITY
- 33: MOLTEN MATERIAL
- 100: EXTRUDER
- 101: DRIVE UNIT
- 102: SPEED REDUCER
- 103: CYLINDER
- 104: SCREW
- 200: UNDERWATER GRANULATION APPARATUS
- 201: DIE PLATE
- 202: CUTTER BLADE HOLDER PART
- 203: DRIVE UNIT
- 204: PLATE SURFACE
- 205: HOLE
- 206: MATERIAL

## Claims

1. A cutter blade comprising:
a cutting edge part configured to slide along a plate surface of a die plate and thereby to cut a material extruded from a hole formed in the plate surface onto the plate surface; and
a base metal part joined to a joint surface of the cutting edge part, wherein
the base metal part includes, in a vicinity of the joint surface, a cutting edge component-detected part in which a cutting edge component is detected, the cutting edge component being a constituent of a cutting edge material contained in the cutting edge part,
the base metal part includes, inside thereof, a cutting edge component under-detection-limit part, the cutting edge component under-detection-limit part being a part in which a concentration of the cutting edge component is equal to or lower than a detection limit thereof, and
the cutting edge component-detected part includes a part in which the concentration of the cutting edge component gradually decreases toward the cutting edge component under-detection-limit part.

2. The cutter blade according to claim 1, wherein
the base metal part contains, as a base metal material, a material containing a film forming component, the film forming component being a constituent of a film forming material from which a film can be formed over the cutting edge part by plating or thermal spraying,
the base metal part includes, in a vicinity of the joint surface, a first film forming component-detected part in which a concentration of the film forming component detected therein is higher than that of the film forming component contained in the base metal material,
the base metal part includes, inside thereof, a second film forming component-detected part in which a concentration of the film forming component is equal to or lower than that of the film forming component contained in the base metal material, and
the first film forming component-detected part includes a part in which the concentration of the film forming component gradually decreases toward the second film forming component-detected part.

3. The cutter blade according to claim 1, wherein
the cutting edge part contains titanium carbide as the cutting edge material,
the cutting edge component contains titanium,
the base metal part contains nickel-containing stainless steel as a base metal material,
the base metal part includes, in a vicinity of the joint surface, a first nickel-detected part in which a concentration of nickel detected therein is higher than that of nickel contained in the base metal material,
the base metal part includes, inside thereof, a second nickel-detected part in which the concentration of nickel is equal to or lower than that of nickel contained in the base metal material,
the first nickel-detected part includes a part in which the concentration of nickel gradually decreases toward the second nickel-detected part, and
the base metal part is directly joined to the cutting edge part.

4. The cutter blade according to claim 1, wherein
the base metal part includes, in a vicinity of the joint surface, a film forming component-detected part in which a film forming component is detected, the film forming component being a constituent of a film forming material from which a film can be formed over the cutting edge part by plating or thermal spraying,
the base metal part includes, inside thereof, a film forming component under-detection-limit part in which the concentration of the film forming component is equal to or lower than the detection limit thereof, and
the film forming component-detected part includes a part in which the concentration of the film forming component gradually decreases toward the film forming component under-detection-limit part.

5. A granulation apparatus comprising:
a cutter blade according to any one of claims 1 to 4;
a cutter blade holder part to which the cutter blade is connected; and
the die plate.

6. A method for manufacturing a cutter blade, comprising the steps of:
forming a film from a film forming material over at least a predetermined joint surface of a cutting edge part by plating or thermal spraying, the cutting edge part being configured to slide along a plate surface of a die plate and thereby to cut a material extruded from a hole formed in the plate surface onto the plate surface;
disposing the cutting edge part in a cavity of a mold;
charging a molten material into the cavity so that the molten material is brought into contact with the joint surface of the cutting edge part, the molten material being obtained by melting a base metal material contained in a base metal part; and
solidifying the molten material and thereby joining the base metal part to the joint surface of the cutting edge part, wherein
the step of joining the base metal part to the joint surface is performed so that:
the base metal part includes, in a vicinity of the joint surface, a cutting edge component-detected part in which a cutting edge component is detected, the cutting edge component being a constituent of a cutting edge material contained in the cutting edge part;
the base metal part includes, inside thereof, a cutting edge component under-detection-limit part, the cutting edge component under-detection-limit part being a part in which a concentration of the cutting edge component is equal to or lower than a detection limit thereof; and
the cutting edge component-detected part includes a part in which the concentration of the cutting edge component gradually decreases toward the cutting edge component under-detection-limit part.

7. The method for manufacturing a cutter blade according to claim 6, wherein
the step of charging the molten material into the cavity is performed so that the base metal material contains a film forming component, the film forming component being a constituent of the film forming material, and
the step of joining the base metal part to the joint surface is performed so that:
the base metal part includes, in a vicinity of the joint surface, a first film forming component-detected part in which a concentration of the film forming component detected therein is higher than that of the film forming component contained in the base metal material;
the base metal part includes, inside thereof, a second film forming component-detected part in which a concentration of the film forming component is equal to or lower than that of the film forming component contained in the base metal material; and
the first film forming component-detected part includes a part in which the concentration of the film forming component gradually decreases toward the second film forming component-detected part.

8. The method for manufacturing a cutter blade according to claim 6, further comprising, prior to the step of forming the film from the film forming material, a step of acquiring a thickness of the film with which the film disappears and the base metal part is thereby directly joined to the cutting edge part when the molten material is solidified, wherein
the step of joining the base metal part to the joint surface is performed so that the base metal part is directly joined to the cutting edge part.

9. The method for manufacturing a cutter blade according to claim 8, wherein
in the step of acquiring the thickness of the film, a thickness of a nickel film that contains nickel and is to be formed over the joint surface is acquired, the thickness of the nickel film being such a thickness that the nickel film disappears and the base metal part is thereby directly joined to the cutting edge part when the molten material is brought into contact with the nickel film and the molten material is thereby solidified,
the step of forming the film of the film forming material is performed so that:
the cutting edge part contains titanium carbide as the cutting edge material;
the cutting edge component contains titanium; and
the nickel film is formed over the joint surface by the plating or the thermal spraying,
the step of charging the molten material into the cavity is performed so that the base metal part contains nickel-containing stainless steel as the base metal material, and
the step of joining the base metal part to the joint surface is performed so that:
the base metal part includes, in a vicinity of the joint surface, a first nickel-detected part in which a concentration of nickel detected therein is higher than that of nickel contained in the base metal material,
the base metal part includes, inside thereof, a second nickel-detected part in which the concentration of nickel is equal to or lower than that of nickel contained in the base metal material, and
the first nickel-detected part includes a part in which the concentration of nickel gradually decreases toward the second nickel-detected part.

10. The method for manufacturing a cutter blade according to claim 6, wherein
the step of joining the base metal part to the joint surface is performed so that:
the base metal part includes, in a vicinity of the joint surface, a film forming component-detected part in which a film forming component is detected, the film forming component being a constituent of the film forming material;
the base metal part includes, inside thereof, a film forming component under-detection-limit part in which the concentration of the film forming component is equal to or lower than a detection limit thereof, and
the film forming component-detected part includes a part in which the concentration of the film forming component gradually decreases toward the film forming component under-detection-limit part.

11. The method for manufacturing a cutter blade according to any one of claims 6 to 10, wherein the step of charging the molten material into the cavity and the step of joining the base metal part to the joint surface are performed in the atmosphere.
